# EUROPEAN PATENT APPLICATION

(11) **EP 3 007 125 A1**
(43) Date of publication of application: **13.04.2016**
(21) Application number: 15188777.5
(22) Date of filing: 07.10.2015
(51) Int. Cl.: G06Q 30/02

(54) **MEMBER PROFILES AND ASSOCIATED SYSTEMS, METHODS, AND MEDIA**

(30) Priority: 08.10.2014 US 201414509777
(71) Applicant: Sears Brands, LLC, Hoffman Estates, IL 60179 (US)
(72) Inventor: Haimovitch, Guy, 44261 Kfar Saba (IL)
(74) Representative: Schollweck, Susanne

(57) **Abstract**

Systems, methods, and apparatus are disclosed that update a profile for a member based on icons associated with a profile of another member and/or personalize a service for the member based on the profile for the member. In some embodiments, a first member may view the profile of a second member which includes one or more icons that represent characteristics about the second member. The first member may inform the computing system that an icon in the profile for the second member is also applicable to the first member. In response to such informing, the computing system may update a profile associated with the first member accordingly.

## Description

### FIELD OF THE DISCLOSURE

The present disclosure relates generally to member profiles that provide information about the person associated with the respective profile. More specifically, the present disclosure relates to systems, methods, and media for updating information contained in such profiles and/or personalizing services based upon information found in such profiles.

### BACKGROUND

Historically, customers physically visited brick-and-mortar stores such as retail stores, grocery stores, consumer electronic boutiques, etc. in order to purchase goods and/or services from such stores. When purchasing goods, a customer often physically selected goods and placed the selected goods into a shopping cart or basket. The customer then proceeded to a checkout lane where a sales associate scanned or otherwise entered each selected good into a point-of-sale (POS) terminal in order to determine the total purchase price for the selected goods. The sales associate then collected payment from the customer and provided the customer with a sales receipt or some other form of proof of purchase. After checking out, the customer left the brick-and-mortar store with the purchased goods.

With the relatively recent advent of e-commerce sites, many customers now eschew traditional brick-and-mortar stores and instead opt to make a sizable portion of their purchases from e-commerce sites. When purchasing merchandise from such sites, a customer may virtually select and place goods in a virtual shopping cart or basket implemented by the e-commerce site. After selecting the desired goods, the customer may then proceeds to through a checkout process in which the e-commerce site determines the total purchase price for the selected goods, collects shipping details such as the name and address of the recipient, collects payment from the customer, and provides the customer with a proof of purchase. After checking out, the e-commerce site causes the purchased goods to be physically delivered to the customer.

Purchasing goods via such e-commerce sites for many customers is more convenient and less time consuming than physically visiting a brick-and-mortar store. Besides providing benefits to the customer, e-commerce sales may also be beneficial to the retailer since such e-commerce sales may provide greater economies of scale and lower overhead than traditional brick-and-mortar stores. While e-commerce may provide benefits to both customers and retailers, there are also disadvantages. One disadvantage is that the e-commerce experience tends to provide less customer to retail employee interaction than the brick-and-mortar store experience. While the reduced interaction may reduce costs for the retailer, it also reduces opportunities for developing strong interpersonal relationships between frequent customers and store employees. Strong interpersonal relationships may aid the retailer in several ways. For example, strong relationships may help to retain customers, may help drive repeat sales, may help drive additional sales via personalized product suggestions provided by knowledgeable employees, etc.

In an attempt to overcome some of these disadvantages, e-commerce sites may establish virtual communities. Such virtual communities may provide various social media features such as message boards, product forums, chat services, customer profiles, etc. that enable the members of the community to develop a sense of belonging. Moreover, personal information gathered about the members via such virtual communities may enable corresponding e-commerce site to personalized the shopping experience for the member.

However, as will become apparent from the following, the ability of the e-commerce site to personalize the experience for the community member depends to at least some extent upon the information the e-commerce site is able to collect from the member. Accordingly, the e-commerce site may improve the personalize experience by obtaining further information about each member.

### BRIEF SUMMARY OF THE DISCLOSURE

Shown in and/or described in connection with at least one of the figures, and set forth more completely in the claims are systems, methods, and computer readable medium that enable a member to conveniently update and/or add information to their profile.

These and other advantages, aspects and novel features of the present disclosure, as well as details of illustrated embodiments thereof, will be more fully understood from the following description and drawings.

### BRIEF DESCRIPTION OF SEVERAL VIEWS OF THE DRAWINGS

FIG. 1 shows an e-commerce system in accordance with an example embodiment of the present disclosure.
FIG. 2 shows an example presentation of a profile used by the e-commerce system of FIG. 1.
FIG. 3 shows a process implemented by an example embodiment of the e-commerce system of FIG. 1
FIG. 4 shows a simplified depiction of a example computing device for use in the system of FIG. 1.

### DETAILED DESCRIPTION

Some disclosed embodiments are directed to updating a profile for a member of a virtual community such as a customer of a e-commerce site. More specifically, some disclosed embodiments permit a member to view one or more aspects of another member's profile and update their profile based upon the viewed profile. Such updating of the profile provides the virtual community with additional information about the member which may be used by the an e-commerce system associated with the virtual community to personalize services provided to the member. For example, an e-commerce system may provide the member with product recommendations, promotional materials, coupons, discounts, etc. that are personalized based upon information found in that members profile.

Various embodiments are described in the context of an e-commerce system that provides virtual community features to its customers. However, some aspects of the disclosed embodiments may also apply to other types of virtual communities and/or businesses such as social networking sites (e.g., Facebook, Google+), professional networking sites (e.g., LinkedIN), casual gaming sites (e.g., Zynga), and other on-line communities.

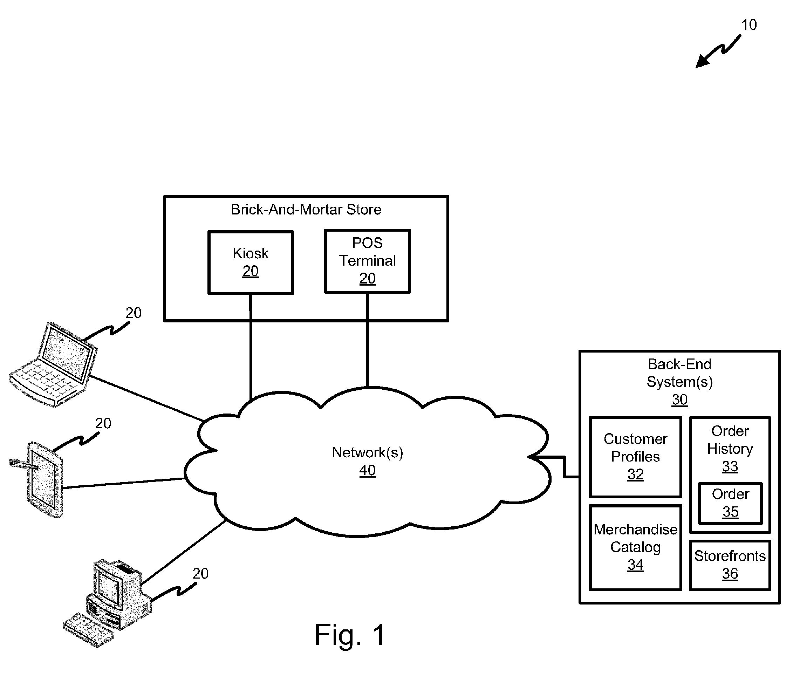

Referring to FIG. 1, an e-commerce system 10 is depicted that facilitates the sale of goods and/or services. As shown, the e-commerce system 10 may include one or more front-end computing devices 20 connected to one or more back-end computing systems 30 via one or more networks 40. The networks 40 may include a number of private and/or public networks such as, for example, wireless and/or wired LAN networks, cellular networks, and the Internet that collectively provide a communication path and/or paths between the front-end computing devices 20 and the back-end computing systems 30.

The front-end computing devices 20 may include computing devices which enable a user to communicate with the back-end computing systems 30 via the network 40. For example, the front-end computing devices 20 may include point-of-sale terminals, kiosks, workstations, desktops, laptops, tablets, smart phones, mobile phones, personal data assistants, hand-held gaming consoles, and/or other computing devices.

The one or more back-end computing systems 30 may include one or more web servers, database servers, routers, load balancers, and/or other computing and/or networking devices. In particular, the back-end computing systems 30 may include one or more database servers and/or storage devices that are configured to store and retrieve profiles 32 and order histories 33 for various customers/members who utilize the shopping services provided by the e-commerce system 10. In general, each profile 32 may include information such as interests, affiliations, hobbies, and/or other characteristics that describe the member associated with the profile 32. The order histories 33 may include details regarding each order 35 placed by the member.

The one or more database servers and/or storage devices of the back-end computing systems 30 may further maintain a merchandise catalog 34 that includes information regarding items which the members may purchase and one or more online storefronts 36 that permit members to purchase items using a front-end computing device 20. In some embodiments, one or more of the storefronts 36 are publicly accessible via a public network such as the Internet thus permitting members to purchase items from such storefronts 36 from the comfort of their homes or from other locations. In some embodiments, one of more of the storefronts 36 are not publicly accessible but limited to front-end computing devices 20 such as kiosks and or point-of-sale terminals within a given brick-and-mortar retail location.

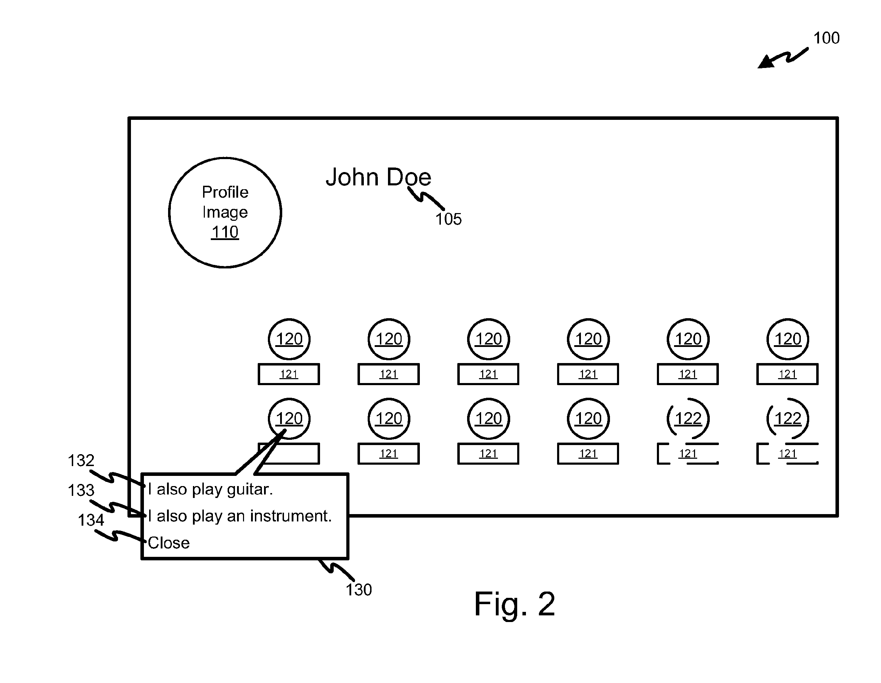

Referring now to FIG. 2, further details regarding member profiles 32 are depicted. In particular, FIG. 2 shows an example presentation 100 of a member profile 32 which may be displayed by a front-end computing device 20 based on information received from back-end computing systems 30. The presentation 100 may include an identifier 105 for the member, a profile image 110, fact icons 120, labels 121, and placeholder icons 122. In one embodiment, the identifier 105 identifies the member by the member's name, which may include the member's first name, last name, middle initial, etc. (e.g., John Doe). In other embodiments, the identifier 105 may identify the member by a username which uniquely identifies that member within the online community provided by the back-end systems 30. For example, the online community may have several John Doe's, but only a single member with the username 'johndoe1234.' In some embodiments, the identifier 105 displayed by the presentation 100 may include both the name (e.g., John Doe) as well as a unique username (e.g., johndoe1234) for the member who is associated with the profile 32.

In some embodiments, the back-end systems 30 may permit the member to select a stock image and/or upload an image for the profile image 110 to be associated with the member and the member profile 32. In particular, the back-end system 30 may provide several images such as silhouettes of persons, graphical depictions of male/female characters, etc. which may be associated with the member profile 32 and used as an avatar to help identify the member in contributions made by the member to the online community. For example, the selected profile image 110 may be displayed in forum posts, posted comments, posted reviews, etc. made by the member to aid other members in identifying the origination of the community contribution.

As shown, the presentation 100 may further include several fact icons 120 and associated labels 121 that provide information about the member associated with the profile 32. In particular, the fact icons 120 provide a graphical representation regarding a particular fact or characteristic about the member. For example, if the member is a male, one of the fact icons 120 may include the male symbol ♂ with an associated label 121 of "Male." Conversely, if the member is a female, one of the fact icons 120 may include the female symbol ♀ with an associated label of "Female." Similarly, if the member is a musician, one of the fact icons 120 may include the treble clef symbol with an associated label of "Musician." If the member plays guitar, then one of the fact icons 120 may include a graphical depiction of a guitar and an associated label of "Guitarist."

In general, the fact icons 120 provide a trade mark, universal symbol, or other graphical representation that is readily associated with a particular fact or characteristic that the member wishes to convey about themselves. In some embodiments, the back-end systems 30 may provide fact icons 120 for a vast array of characteristics that may describe the member. For example, the back-end systems 30 may include fact icons 120 and associated labels 121 for numerous different hobbies, interests, sports teams, schools, honors, awards, professional organization, occupations, charities, political interests, etc for which a member may want to associate and or be otherwise characterized. In this manner, the fact icons 120 may provide an aesthetically pleasing and quick way of conveying several characteristics about a particular member.

Besides the fact icons 120 already chosen for a member, the presentation 100 may further include placeholder icons 122. In one embodiment, the back-end systems 30 cause the front-end computing device 20 to display the presentation 100 with placeholder icons 122 when the member is viewing their own profile 32. The placeholder icons 122 may provide a convenient way for the member 105 to add additional facts to their profile 32. To this end, the placeholder icons 122 may include generic icons via which a member may select a specific fact icon 120 to be added to the profile 32 and/or suggested icons which a member may accept in order to add the respective fact icon 120 to the profile 32.

For example, the back-end systems 30 may analyze a member's activities in the community and/or order history 33 and suggest placeholder icons 122 for facts that appear to be relevant to the member. The presentation 100 may display such placeholder icons 122 in a manner that clarifies that the placeholder icons 122 are not part of the profile 32 until the member confirms and/or otherwise adds the associated fact icon 120 to their profile 32. For example, the presentation 100 may display the placeholder icons 122 as ghosted icons (e.g., without color and highly translucent) and provide a label 121 such as "Please Confirm" that clearly conveys to the member that the placeholder icons 122 are not yet part of the profile 32.

In one embodiment, the member may add a particular fact icon 120 to the profile 32 by confirming a corresponding placeholder icon 122. For example, the front-end computing device 20 may display a pop-up window or a dialog box in response to the member selecting a placeholder icon 122 which requests the member to either accept, deny, or cancel the addition of the fact icon 120 associated with the placeholder icon 122. Based on input received from the member, the front-end computing device 20 may inform the back-end systems 30 to add or remove the characteristic and the fact icon 120 associated with the placeholder icon 122 to or from the member's profile 32.

The front-end computing devices 20 and back-end systems 30 may further enable a member to added characteristics and associated fact icons 120 to their profile 32 when viewing the profile of another member. For example, the front-end computing device 20 may display a graphical control such as tooltip control 130 when the member selects (e.g., clicks, touches, hovers over, etc.) a fact icon 120 in a profile 32 for another member. The tooltip control 130 may provide the member with an option 132 to add the fact icon 120, an option 133 to add a similar fact icon 120 to their profile 32, and/or an option 134 to cancel the addition of such a fact icon 120 to their profile 32. In response to a selection of option 132, the front-end computing device 20 may instruct the back-end systems 30 to add the same fact icon 120 to the member's profile 32. In response to a selection of the option 133 associated with similar fact icons, the front-end computing device 20 may present the member with fact icons 120 for a group of related characteristics.

For example, another member may have a fact icon 120 that indicates that the member plays guitar. In response to the member selecting an "I also play an instrument" option 133, the front-end computing device 20 may present the member with fact icons 120 for other instruments (e.g., piano, drums, etc.) and possibly other related fact icons 120 (e.g., "musician," "music enthusiast," "music instructor," etc.) In this manner, a member may conveniently add relevant facts to their profile 32 based upon fact icons 120 displayed in another member's profile.

As mentioned above, the back-end systems 30 may maintain profiles 32 for its members. In particular, the back-end systems 30 may provide an interface via which members may review profiles 32 of other members and update their own profile based on information found in profiles 32 of other members. The back-end systems 30 may then personalize services provided by the e-commerce system 10 based upon the updated profiles 32.

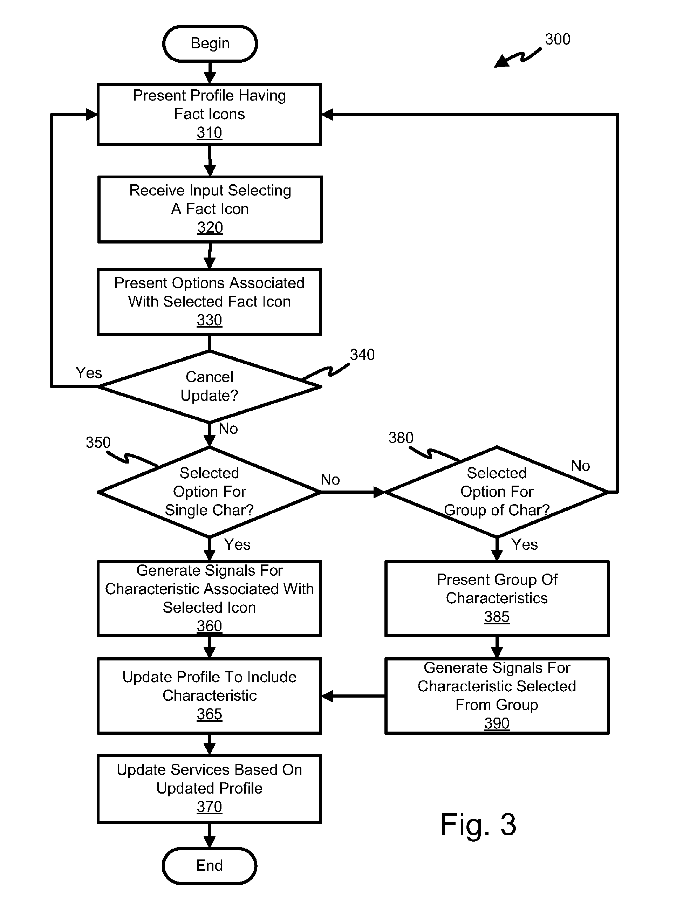

Referring now to FIG. 3, a flow chart for a process 300 is shown that may be implemented by the e-commerce system 10 in order to provide the above capabilities. Per the process 300, the e-commerce system 10 at 310 may present a first member with the profile 32 for a second member. The e-commerce system 10 may cause a front-end computing device 20 associated with the first member to provide a presentation 100 of the profile 32 for the second member in response to various activities of the first member. In particular, the first member may locate the second member and request the e-commerce system 10 to provide the profile 32 for the second member via a number of different ways. For example, the first member may locate the second member via community contributions (e.g., forum posts, product reviews, comments, etc.) of the second member. The first member may also locate the second member via searching capabilities provided by the e-commerce system 10. The first member may further locate the second member via matching services provided by the e-commerce system 30 in which the e-commerce system 30 attempts to identify members with similar interests, purchasing habits, histories, etc.

At 320, the front-end computing device 20 associated with the first user may receive input from the first user that indicates the first user is selecting a fact icon 120 of the presented profile 32. For example, the first user may use an input device such as a mouse or a touch screen to click on or hover over a fact icon 120 of the presented profile 32.

The front-end computing device 20 at 330 may present the first user with one or more options 132, 133, 134 associated with the selected fact icon 120. In particular, the front-end computing device 20 in one embodiment provides such options 132, 133, 134 by displaying a tooltip control 130 that includes the respective options 132, 133, 134. However, the front-end computing device 20 may provide such options 132,133, 134 via other types of user interface controls such as dialog boxes, pop-up windows, etc.

At 340, the front-end computing device 20 may determine whether the member elects to cancel updating their profile 32 based on the selected fact icon 120. In one embodiment, the front-end computing device 20 determines that the member has elected to cancel the update in response to the member selecting option 134 which is associated with canceling the update. However, the front-end computing device 20 may provide the member with additional mechanisms for canceling the update. For example, pressing of certain keys (e.g., the ESC key) may signal to the front-end computing device 20 that the update is to be canceled. As another example, selecting another fact icon 120 may cancel the current update and cause the front-end computing device to present options 132, 133, 134 for the newly selected fact icon 120. Regardless, if the front-end computing device 20 determines that the member elects to cancel, then the front-end computing device 20 may return to 310 in order to re-present the profile 32 and await further fact icon selections.

However, if the front-end computing device at 350 determines that the member selected the option 132 associated with adding the characteristic associated with the selected fact icon 120 to the member's profile 32, then the front-end computing device at 360 may generate one or more signals that identify the characteristic to the back-end systems 30 and that request the member's profile 32 be updated to include the characteristic.

At 365, the back-end systems 30 in response to the received signals may update the profile 32 for the member to include the identified characteristic. As a result of such an update, the back-end system 30 may cause further presentations 100 of the member's profile 32 to include the same fact icon 120 of the other member's profile 32 which was representative of the identified characteristic. Furthermore, the back-end system 30 at 370 may update various services provided to the member based on the updated profile 32. For example, the back-end system 30 may revise product suggestions, promotional discounts, promotional offers, advertisements, etc. based upon the updated profile 32.

However, if the front-end computing device at 380 determines that the member selected the option 133 associated with adding a characteristic from a group of characteristics associated with the selected fact icon 120, then the front-end computing device at 385 may present the member with the group of characteristics. For example, in response to selecting "I also play an instrument," the front-end computing device 20 may present a list of instruments and associated fact icons 120.

At 390, the front-end computing device at 360 may generate one or more signals that identify the characteristic which the member selected from the group of characteristics to the back-end systems 30 and that request the member's profile 32 be updated to include the selected characteristic.

In response to receiving such signals, the back-end systems 30 again at 365 may update the profile 32 for the member to include the identified characteristic. As a result of such an update, the back-end system 30 may cause further presentations 100 of the member's profile 32 to include a fact icon 120 which is representative of the identified characteristic and which may be different than the fact icon 120 found in the other member's profile 32. Furthermore, the back-end system 30 again at 370 may update various services provided to the member based on the updated profile 32.

While FIG. 1 depicts an example embodiment of the e-commerce system 10, the e-commerce system 10 may be implemented in numerous different manners using a wide range of different computing devices, platforms, networks, etc. Moreover, aspects of the e-commerce system 10 may be implemented using a client/server architecture, a peer-to-peer (P2P) architecture, and/or another networking architecture. Such embodiments are envisioned and protection for such embodiments is sought to the extent encompassed by the appended claims.

In some embodiments, the front-end computing devices 20 and the back-end computing systems 30 may be implemented using various types of computing devices.

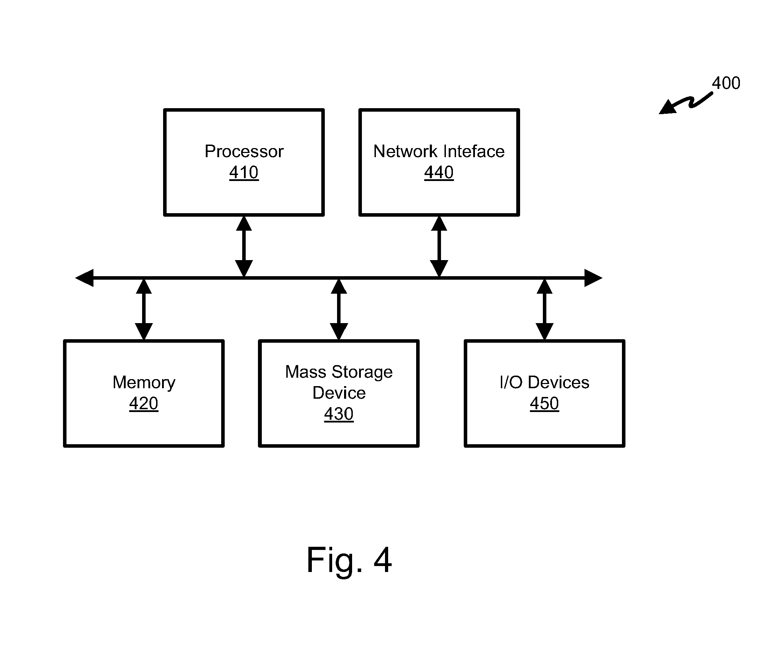

FIG. 4 provides a simplified depiction of a computing device 400 suitable for such aspects of e-commerce system 10. As shown, the computing device 400 may include a processor 410, a memory 420, a mass storage device 430, a network interface 440, and various input/output (I/O) devices 450. The processor 410 may be configured to execute instructions, manipulate data and generally control operation of other components of the computing device 400 as a result of its execution. To this end, the processor 410 may include a general purpose processor such as an x86 processor or an ARM processor which are available from various vendors. However, the processor 410 may also be implemented using an application specific processor and/or other circuitry.

The memory 420 may include various types of random access memory (RAM) devices, read only memory (ROM) devices, flash memory devices, and/or other types of volatile or non-volatile memory devices. In particular, such memory devices of the memory 420 may store instructions and/or data to be executed and/or otherwise accessed by the processor 410. In some embodiments, the memory 420 may be completely and/or partially integrated with the processor 410.

In general, the mass storage device 430 may store software and/or firmware instructions which may be loaded in memory 420 and executed by processor 410. The mass storage device 430 may further store various types of data which the processor 410 may access, modify, and/otherwise manipulate in response to executing instructions from memory 420. To this end, the mass storage device 430 may comprise one or more redundant array of independent disks (RAID) devices, traditional hard disk drives (HDD), sold state device (SSD) drives, flash memory devices, read only memory (ROM) devices, and/or other types of non-volatile storage devices.

The network interface 440 may enable the computing device 400 to communicate with other computing devices via network 40. To this end, the networking interface 440 may include a wired networking interface such as an Ethernet (IEEE 802.3) interface, a wireless networking interface such as a WiFi (IEEE 802.11) interface, a radio or mobile interface such as a cellular interface (GSM, CDMA, LTE, etc) or near field communication (NFC) interface, and/or some other type of networking interface capable of providing a communications link between the computing device 400 and network 40 and/or another computing device.

Finally, the I/O devices 450 may generally provide devices which enable a user to interact with the computing device 400 by either receiving information from the computing device 400 and/or providing information to the computing device 400. For example, the I/O devices 450 may include display screens, keyboards, mice, touch screens, microphones, audio speakers, digital cameras, optical scanners, RF transceivers, etc.

While the above provides some general aspects of a computing device 400, those skilled in the art readily appreciate that there may be significant variation in actual implementations of a computing device. For example, a smart phone implementation of a computing device generally uses different components and may have a different architecture than a database server implementation of a computing device. However, despite such differences, computing devices generally include processors that execute software and/or firmware instructions in order to implement various functionality. As such, the above described aspects of the computing device 400 are not presented from a limiting standpoint but from a generally illustrative standpoint. The present application envisions that aspects of the present application may find utility across a vast array of different computing devices and the intention is not to limit the scope of the present application to a specific computing device and/or computing platform beyond any such limits that may be found in the appended claims.

Various embodiments have been described herein by way of example and not by way of limitation in the accompanying figures. For clarity of illustration, exemplary elements illustrated in the figures may not necessarily be drawn to scale. In this regard, for example, the dimensions of some of the elements may be exaggerated relative to other elements to provide clarity. Furthermore, where considered appropriate, reference labels have been repeated among the figures to indicate corresponding or analogous elements.

Moreover, certain embodiments may be implemented as a plurality of instructions on a tangible, computer readable storage medium such as, for example, flash memory devices, hard disk devices, compact disc media, DVD media, EEPROMs, etc. Such instructions, when executed by one or more computing devices, may result in the one or more computing devices performing various aspects of the process depicted in FIG. 3.

While the present disclosure has described certain embodiments, it will be understood by those skilled in the art that various changes may be made and equivalents may be substituted without departing from the intended scope of protection. In addition, many modifications may be made to adapt a particular situation or material to the teachings of the present disclosure without departing from its scope. Therefore, it is intended that the present disclosure not be limited to the particular embodiment or embodiments disclosed, but encompass all embodiments falling within the scope of the appended claims.

## Claims

1. A method of handling a first profile for a first member, the method comprising:
causing a computing device associated with the first member to present a second profile for a second member that includes at least one icon that represents a characteristic about the second member;
receiving one or more signals from the computing device that identify the characteristic represented by the at least one icon as also being applicable to the first member; and
in response to said receiving, updating the first profile based upon the characteristic of the second member identified as also being applicable to the first member.

2. The method of claim 1, wherein said updating the first profile comprises adding the characteristic identified by the at least one icon to the first profile.

3. The method of claim 2, further comprising causing the computing device associated with the first member to present the updated first profile with the at least one icon representative of the characteristic.

4. The method of claim 1, wherein:
the characteristic represented by the at least one icon is associated with a group of related characteristics;
the one or more signals identify a characteristic selected from the group of related characteristics; and
said updating comprises adding the characteristic selected from the group of related characteristics to the first profile.

5. The method of claim 4, further comprising causing the computing device associated with the first member to present the updated first profile with an icon representative of the characteristic selected from the group of related characteristics.

6. The method of 5, wherein:
the characteristic represented by the at least one icon of the second profile is different than the characteristic selected from the group of related characteristics; and
the icon presented with the updated first profile is different than the at least one icon of the second profile.

7. The method of claim 1, further comprising personalizing a service for the first member based on the updated first profile.

8. A non-transitory computer readable storage medium, comprising a plurality of instruction that, in response to being executed, result in one or more computing devices:
causing a computing device associated with a first member having a first profile to present a second profile for a second member that includes at least one icon that represents a characteristic about the second member; and
updating the first profile based upon the characteristic of the second member in response to receiving, from the computing device associated with the first member, one or more signals that identify the characteristic represented by the at least one icon as also being applicable to the first member.

9. The non-transitory computer readable storage medium of claim 8, wherein the plurality of instruction further result in the one or more computing devices updating the first profile by adding the characteristic identified by the at least one icon to the first profile.

10. The non-transitory computer readable storage medium of claim 9, wherein the plurality of instruction further result in the one or more computing devices causing the computing device associated with the first member to present the updated first profile with the at least one icon representative of the characteristic.

11. The non-transitory computer readable storage medium of claim 10, wherein:
the characteristic represented by the at least one icon is associated with a group of related characteristics;
the one or more signals identify a characteristic selected from the group of related characteristics; and
the plurality of instruction further result in the one or more computing devices updating the first profile by adding the characteristic selected from the group of related characteristics.

12. The non-transitory computer readable storage medium of claim 11, wherein the plurality of instruction further result in the one or more computing devices causing the computing device associated with the first member to present the updated first profile with an icon representative of the characteristic selected from the group of related characteristics.

13. The non-transitory computer readable storage medium of claim 11, wherein:
the characteristic represented by the at least one icon of the second profile is different than the characteristic selected from the group of related characteristics; and
the plurality of instruction further result in the one or more computing devices causing the computing device associated with the first member to present the updated first profile with an icon that is representative of the characteristic selected from the group of related characteristics and that is different than the at least one icon of the second profile.

14. The non-transitory computer readable storage medium of claim 8, wherein the plurality of instruction further result in the one or more computing devices personalizing a service for the first member based on the updated first profile.

15. A system for maintaining a plurality of profiles for a plurality of members, the system comprising:
one or more storage devices configured to store the plurality of profiles, a plurality characteristics used to describe characteristics about the plurality of members, and a plurality of icons representative of the plurality characteristics; and
one or more processors configured to send, to a computing device associated with a first member, a second profile for a second member that includes at least one icon that represents a characteristic about the second member, and update the first profile based upon the characteristic of the second member in response to receiving, from the computing device associated with the first member, one or more signals that identify the characteristic represented by the at least one icon as also being applicable to the first member.

16. The system of claim 15, wherein the one or more processors are further configured to update the first profile by adding the characteristic identified by the at least one icon to the first profile.

17. The system of claim 15, wherein the one or more processors are further configured to update the first profile by adding the at least one icon representative of the characteristic to the first profile.

18. The system of claim 15, wherein:
the one or more storage devices further include groups of related characteristics; and
the one or more processors are configured to present, via the computing device associated with the first member, a group of related characteristics for the characteristic represented by the at least one icon, and update the first profile to include a characteristic selected from the group of related characteristics.

19. The system of claim 15, wherein:
the one or more storage devices further include groups of related characteristics; and
the one or more processors are configured to present, via the computing device associated with the first member, a group of related characteristics for the characteristic represented by the at least one icon, and update first profile to include an icon that is representative of the characteristic selected from the group of related characteristics.

20. The system of claim 15, wherein the one or more processors are further configured to personalize a service for the first member based on the updated first profile.
